(19) Europäisches Patentamt

European Patent Office

Office européen des brevets

(11) **EP 0 942 261 B1**

(12) **FASCICULE DE BREVET EUROPEEN**

(45) Date de publication et mention
de la délivrance du brevet:
**02.02.2005 Bulletin 2005/05**

(51) Int Cl.⁷: **G01B 11/22**

(21) Numéro de dépôt: **99400572.6**

(22) Date de dépôt: **09.03.1999**

(54) **Procédé et dispositif pour la mesure de fonds de cratères sur la surface d'un échantillon**

Verfahren und Vorrichtung zur Messung von Strukturtiefen einer Probenoberfläche

Procedure and device to measure the bottom of craters on a surface of a sample

(84) Etats contractants désignés:
**DE FR GB**

(30) Priorité: **13.03.1998 FR 9803133**

(43) Date de publication de la demande:
**15.09.1999 Bulletin 1999/37**

(73) Titulaire: **CAMECA**
**F-92400 Courbevoie (FR)**

(72) Inventeur: **Monsallut, Pierre**
**94117 Arcueil Cedex (FR)**

(74) Mandataire: **Lucas, Laurent Jacques et al**
**THALES Intellectual Property,**
**31-33 avenue Aristide Briand**
**94117 Arcueil Cedex (FR)**

(56) Documents cités:
**US-A- 5 371 582     US-A- 5 699 160**

• **"Nondestructive measurement of groove depth of optical disks" IBM TECHNICAL DISCLOSURE BULLETIN, vol. 29, no. 11, avril 1987, pages 4798-4799, XP002087260 ARMONK, NY, USA**
• **G. MAKOSCH, F. SCHEDEWIE: "Interferometric method for step height measurements on surfaces with variable tilts." IBM TECHNICAL DISCLOSURE BULLETIN, vol. 23, no. 4, septembre 1980, pages 1485-1486, XP002087261 ARMONK, NY, USA**

## Description

La présente invention concerne un procédé et un dispositif pour la mesure de fonds de cratères obtenus par le bombardement d'un faisceau d'ions primaires sur un échantillon au cours de son analyse physico-chimique.

Une des méthodes d'analyse particulièrement adaptée pour effectuer ces analyses est connue sous l'abréviation anglo-saxonne SIMS de « Secondary Ion Mass Spectrometer », elle analyse par spectrométrie de masse les ions secondaires.

Avec ces appareils, il est souvent nécessaire de mesurer en cours d'analyse la profondeur des cratères formés par l'impact du faisceau d'ion à la surface de l'échantillon analysé, notamment lorsque l'échantillon comporte plusieurs couches superposées de matière, comme c'est le cas pour les échantillons formés de plusieurs couches de matériaux semi-conducteurs superposés. Les cratères obtenus ont généralement de très faibles dimensions. Ils mesurent environ 100 $\mu$m de côté et leur profondeur varie en cours d'érosion entre 1 nm et quelques $\mu$m pour une vitesse d'érosion de 0,1 à 10 nm/s. Le relevé de la composition physico-chimique de l'échantillon dans ses différentes couches s'effectue habituellement en établissant en cours d'analyse une correspondance entre le temps de l'analyse pendant lequel l'échantillon est soumis au bombardement ionique et la profondeur du cratère résultant, cette dernière étant mesurée au moyen d'un profilomètre. Cette méthode de mesure est contraignante car elle nécessite le retrait de l'échantillon de l'analyseur à chaque fois qu'une mesure de profondeur doit être effectuée. Elle souffre également d'imprécision.

Pour pallier ces inconvénients, il a été proposé d'utiliser un dispositif de mesure appliquant le principe de l'interférométrie optique. Pour la mise en oeuvre de ce principe, un faisceau de lumière monochromatique et cohérente est séparé à un endroit déterminé en deux faisceaux. Chaque faisceau se propage dans l'espace suivant un trajet qui lui est propre jusqu'à un autre endroit où les deux faisceaux sont recomposés en un seul par un système optique approprié. Le faisceau résultant de cette recomposition est ainsi formé de la somme de deux faisceaux ayant parcouru des longueurs d'espace différentes souvent désignées sous le vocable « différence de marche » et qui sont déphasés l'un par rapport à l'autre. Le déphasage ainsi créé donne naissance à un système de « franges d'interférences » composé d'alternances d'intensité lumineuse faibles et fortes. Suivant les réalisations, le système de franges peut être localisé ou non, étendu ou non. La variation relative de la « différence de marche » est déterminée par comptage des franges défilant à un endroit donné de l'espace. Dans ce système, la qualité de la mesure dépend du contraste entre franges claires et sombres et par conséquent du rapport signal à bruit ainsi que l'interpolation qu'il est possible de faire. Un interféromètre bien connu fonctionnant suivant le principe décrit précédemment est l'interféromètre de Michelson, dont une description peut être trouvée notamment à la page 135 du cours de Physique Générale « OPTIQUE » ayant pour auteurs G. Bruhat et A. Kastler édité chez Masson & C$^{ie}$, 120 bd Saint Germain, Paris VI$^e$. Dans cet interféromètre, la période du motif de franges correspond à une différence de marche de $\lambda$, où $\lambda$ est la longueur d'onde du faisceau lumineux. La différence de marche qui résulte de deux aller-retour des deux faisceaux sur des cibles réfléchissantes permet de mesurer une variation de la distance relative des deux cibles de $\frac{\lambda}{2}$. A titre d'exemple, si la source lumineuse est un laser Hélium-Néon, $\frac{\lambda}{2}$ = 316,5 nm dans le vide. Cette résolution peut être améliorée à $\frac{\lambda}{8}$ ou $\frac{\lambda}{16}$ par interpolation soit environ 40 nm dans des conditions exceptionnelles. En effet, ces interféromètres restent très sensibles aux variations de contraste qui peuvent être provoquées par les variations éventuelles de la réflectivité d'une des deux cibles et leur implantation dans la chambre d'analyse d'un analyseur ionique SIMS est très difficile à réaliser du fait de l'orientation à 90° l'un par rapport à l'autre des miroirs de renvoi, un des miroirs étant formé à la surface de l'échantillon lui-même.

Une méthode de mesure utilisable dans des analyseurs SIMS est décrite dans un article intitulé « On-line Sputter Rate Measurements During SIMS, AES Depth Profiling », de M.J. Kempf publié par A. Benninghoven et al. aux éditions Springer-Verlag Berlin-Heidelberg-New York, 1979 et dont un mode de réalisation est décrit dans le brevet des Etats-Unis d'Amérique N° 4 298 283 intitulé « Interferometric Measuring Method ».Celle ci met en oeuvre un interféromètre laser dont le faisceau émetteur est partagé en deux voies par un cristal de calcite avant d'être dirigé dans la chambre d'analyse d'un analyseur SIMS sur l'échantillon analysé dans une direction normale de l'échantillon. Les deux faisceaux réfléchis sont redirigés sur le cristal de calcite pour être recombinés en un seul faisceau et former un système d'interférence qui dépend de la « différence de marche » des deux faisceaux. Un dispositif de ce genre est par exemple décrit dans le brevet US-A-5 699 160.

Cette méthode permet d'effectuer des mesures de profondeur très précises de l'ordre du nanomètre pendant tout le temps de l'analyse. En revanche, elle nécessite une mise au point de l'interféromètre très délicate car le résultat des mesures est très dépendant de l'orientation de l'échantillon relativement à la direction des deux faisceaux.

Une autre méthode, également décrite dans le brevet précité ainsi que dans le brevet des Etats-Unis d'Amérique US 4 353 650 ayant pour titre « Laser Heterodyne Surface Profiler » met en oeuvre le principe connu de l'interférométrie hétérodyne .Elle consiste à détecter non pas une différence de luminosité du système de frange pour compter le défilement, mais à mesurer le déphasage d'une information contenue dans le système par rapport à la même information contenue dans la source lumineuse avant séparation des faisceaux. Cette méthode permet de s'affranchir des variations de contraste, tant que le rapport signal sur bruit reste convenable. La mesure fine de ce déphasage peut atteindre 1/256 de la période temporelle. Si l'interféromètre est tel qu'un déphasage d'une période temporelle corresponde spatialement à un déplacement de $\frac{\lambda}{2}$, on obtient une résolution de $\frac{\lambda}{512}$ soit 1,25 nm. La mise en oeuvre d'un interféromètre hétérodyne nécessite d'utiliser une source lumineuse qui n'est plus monochromatique, mais bifréquence. Cette source émet deux faisceaux quasi cylindriques dont la différence de fréquence peut être de l'ordre de 3 MHz ou 20 MHz. Les deux composantes de fréquences sont polarisées dans un monoplan et orthogonales entre elles. Une fraction de faisceau de sortie est envoyée sur un analyseur, calé à 45° par rapport aux deux plans de polarisation qui laisse passer une fraction des deux composantes dans le même plan de sortie. Un photodétecteur placé derrière l'analyseur est modulé à la fréquence demi-somme et à la fréquence demi-différence. La fréquence demi-somme se trouve en dehors de la bande passante du détecteur, la fréquence demi-différence est utilisée comme référence de phase. Le signal de sortie du photodétecteur est mis en forme selon un signal carré. Les deux composantes polarisées orthogonalement sont ensuite séparées par un interféromètre pour former deux faisceaux qui sont envoyés sur deux trajets distincts, un trajet dit de référence et un trajet de mesure. Après réflexion sur leur cible, les deux faisceaux sont recombinés sur un même axe avec des directions de polarisations planes orthogonales et le tout est appliqué sur un détecteur qui mesure la différence de marche des deux faisceaux. Le détecteur se compose d'un analyseur calé à 45° par rapport aux deux directions de polarisation reçues. Un photodétecteur situé derrière reçoit le signal somme des deux fréquences et fournit comme le détecteur situé dans la source un signal carré basse fréquence. Si les deux cibles ne sont pas en mouvement relatif, ce signal est à la même fréquence que celui fourni par le détecteur d'une valeur fixe, mais il est simplement déphasé d'une valeur fixe, qui dépend des longueurs des trajets des deux faisceaux.

En appelant $f_1$ la fréquence du premier faisceau et $f_2$ la fréquence du deuxième, L la somme des distances entre la source laser et l'interféromètre et l'interféromètre au détecteur, $L_1$ la longueur du faisceau de mesure en dehors de l'interféromètre et $L_2$ la longueur du faisceau de référence, dans les interféromètres conventionnels la différence de marche $\Delta L = L_1 - L_2$ donne la valeur du déphasage à $2k\pi$ près, dans la technique hétérodyne le déphasage dépend fortement de la différence de marche AL et d'une façon négligeable des variations du chemin $L+(L_1+L_2)/2$ de mode commun.

Ainsi, pour un interféromètre de type Michelson, un déplacement relatif des cibles de $\frac{\lambda}{2}$ correspond à un déphasage de $2\pi$ du signal spatial et une variation de mode commun n'induit aucun changement. Dans la technique hétérodyne, un déplacement relatif des cibles de $\lambda/2$ correspondra à un déphasage de $2\pi$ du signal temporel.

Les interféromètres à séparation de polarisation se distinguent les uns des autres selon qu'ils sont simples, doubles, quadruples ou composites. Un grand nombre de ces interféromètres ont été construits et commercialisés par la société de droit des états unis d'Amérique Hewlett Packard.

Pour adapter un spectromètre de masse à la mesure de cratère de très faible dimension dans un analyseur ionique, un certain nombre de contraintes sont à satisfaire. Il est tout d'abord hors de question de viser les cratères ayant des dimensions de l'ordre de 100 µm avec des faisceaux cylindriques de 3 mm. D'autre part, le diamètre du faisceau à l'endroit du cratère doit être inférieur à 100 µm pour éviter les effets de bords. Malheureusement, un tel faisceau présente trop de divergence. Toutefois, un étranglement de 60 µm peut s'obtenir en focalisant un faisceau de 3 mm avec une lentille mince convergente de 223 mm de focale sans aberrations. Mais, en supposant que l'on arrive à envoyer le faisceau sur l'échantillon, il faut pouvoir le renvoyer dans l'interféromètre sur le bon axe, avec le bon diamètre. La normale à l'échantillon au point d'impact n'est pas forcément confondue avec l'axe optique de la colonne secondaire (écart ± 1 mm) de collection de l'analyseur physico-chimique. Quand bien même elle serait confondue, cet axe passe par plusieurs diaphragmes et fentes de dimensions faibles, voire nulles, ce qui exclut un passage du faisceau par cet axe à cause des problèmes de distorsion des fronts d'onde, de collimation et d'ajustages. Il apparaît préférable que le faisceau arrive sous une incidence oblique pour se réfléchir alors symétriquement par rapport à la normale par réflexion spéculaire. A titre d'exemple, un échantillon de silicium poli (cristallin ou polycristallin) présente un coefficient de réflexion spéculaire d'environ 30%, mais présente aussi de la réflexion par diffusion, suffisamment intense pour être vue à l'oeil nu avec un faisceau de 1 mW. Ainsi, en conservant une optique de visée photonique, le point d'impact peut toujours être observé sur l'échantillon pour ajuster le système pour le pointer à l'emplacement du futur cratère. L'intérêt de la réflexion spéculaire est d'être du type métallique et de ne pas perturber la polarisation.

Une première approche de solution peut consister à utiliser le faisceau réfléchi divergent, qui présentera au bout de 223 mm un diamètre de 3 mm. Il suffirait alors de le refocaliser par une seconde lentille de 223 mm pour le rendre acceptable par l'interféromètre. Dans ces conditions, il peut être renvoyé par un jeu complexe de miroirs, en prenant garde de conserver l'orientation du plan de polarisation. En utilisant par exemple l'interféromètre Hewlett Packard HP 10702A, le faisceau peut être renvoyé à 12,7 mm à côté de son point de départ.

Un montage possible peut être une sorte de fourche enjambant le corps central, un bras comporte l'interféromètre, la tête laser et le détecteur, l'autre le système de renvoi. La visée s'ajuste en déplaçant mécaniquement la fourche autour du corps. Mais dans cette solution, chaque variation même infime du « tilt » de l'échantillon c'est à dire sa position par rapport à des axes de références fixes de l'analyseur, nécessite de réajuster l'ensemble. Le bras de mesure parcourt une partie de la colonne et une partie de la fourche. Sa longueur reste très sensible aux vibrations de l'échantillon et à la dilatation des éléments. La résolution fondamentale est $\frac{\lambda}{2}$, soit $\frac{\lambda}{512}$ = 1,2 nm après traitement.

Une deuxième approche peut consister à renvoyer sur lui-même le faisceau réfléchi par un miroir plan, et donc sur l'échantillon. L'inconvénient est qu'en le laissant diverger, il présentera un diamètre prohibitif au niveau de l'interféromètre, et aura une section de plusieurs mm au niveau de l'échantillon. Il se réfléchira mal, sur une surface inégale, et sera gêné dans son passage par son grand diamètre. Une solution serait de le renvoyer sur l'échantillon en le refocalisant, avec le même angle d'ouverture. Il suffit alors d'utiliser un miroir sphérique dont le centre de courbure est presque confondu avec le point d'impact sur l'échantillon. Cette disposition présente plusieurs avantages importants. Tant que le faisceau frappe la surface du miroir, il est renvoyé sur lui-même, quel que doit le tilt de l'échantillon. Avec une surface du miroir compatible avec l'environnement mécanique, une tolérance de ± 0,1° en roulis et tangage est acceptable. L'alignement de ce miroir est très simple : l'image du point d'impact initial donnée par le miroir est un second point de même dimension sur l'échantillon, qui est confondu avec celui-ci lorsque le miroir est aligné. Un simple mouvement de « tilt » à deux axes du miroir convient, il suffit de chercher à confondre les deux spots sur l'échantillon. Le bras de mesure faisant deux aller-retour, l'interféromètre double ainsi réalisé permet d'obtenir une résolution fondamentale de $\frac{\lambda}{4}$, et de $\frac{\lambda}{1024}$ = 0,6 nm après traitement. Le faisceau retour repasse par la même lentille de focalisation, il est donc renvoyé dans l'interféromètre sur lui-même avec un diamètre de 3 mm. Dans ces conditions, l'utilisation d'un interféromètre du type Hewlett Packard HP 10705A devrait convenir, avec l'inconvénient que le bras de référence est situé dans l'interféromètre, que le système n'est pas différentiel, et est donc sensible à la valeur absolue du bras de mesure. Si le corps central est en alliage L316, et l'échantillon au moins à 160 mm de l'interféromètre une simple variation de 1°C de température de la matière induit une variation de cette distance de 2500 nm environ. Une variation inférieure à 1 nm/s demande une température stable à mieux que $\frac{\lambda}{2500}$ °C/s.

Pour pallier ces inconvénients, une autre solution peut consister à utiliser un interféromètre différentiel, les deux bras étant envoyés sur l'échantillon, un dans le cratère, l'autre sur la surface à proximité du cratère. La différence de marche ne dépend en principe que de la profondeur du cratère et de l'angle d'incidence. Les interférences données par les deux faisceaux proches ne seront par perturbées s'ils sont éloignés d'au moins 100 µm entre leurs axes. Une valeur de 200 µm peut être choisie. Il peut alors être envisagé d'utiliser des interféromètres Hewlett Packard du type HP 10715A ou HP 10719A qui possèdent deux bras doubles de mesures parallèles. Ainsi, en envoyant les quatre faisceaux sur l'échantillon, un seul étant dans le cratère, la résolution fondamentale n'est donc pas de $\frac{\lambda}{8}$ mais de $\frac{\lambda}{4}$, comme dans la deuxième solution. Si l'on n'utilise qu'un faisceau de chaque bras, en bouchant les deux autres avec des miroirs fixés à l'interféromètre, la résolution obtenue est toujours $\frac{\lambda}{4}$, avec un faisceau dans le cratère et l'autre sur la surface à proximité.

Le problème consiste alors à focaliser les deux faisceaux en obtenant deux spots de 60 µm voisins de 200 µm environ et à les renvoyer sur eux-mêmes. Mais en supposant que l'on réussisse à envoyer deux spots répondant à ces conditions sur l'échantillon, leurs axes étant parallèles entre eux ou non, avec un seul miroir sphérique, on ne peut aligner son centre que sur un seul spot ou entre les deux. En le mettant sur un seul, le second rayon se réfléchit en un point de l'échantillon symétrique par rapport au centre. Il devient alors très complexe de le renvoyer dans l'interféromètre, et dans ce cas, la différence de marche ne dépendra pas que de la profondeur du cratère. En le mettant entre les deux, chaque spot est réfléchi sur l'autre, et la différence de marche totale devient nulle et de plus, les faisceaux retour ne sont plus tout à fait sur les axes des faisceaux aller. Enfin, en mettant deux miroirs de centres espacés de 200 µm, pour renvoyer des faisceaux de diamètre supérieur à 2 mm, le problème devient insoluble.

Le but de l'invention est de réaliser un dispositif de mesure reposant sur le principe de l'interférométrie hétérodyne et utilisant un interféromètre à séparation de polarisation ne présentant pas les inconvénients des interféromètres précités.

A cet effet, l'invention a pour objet un procédé de mesure de fond de cratères en cours de formation sur un échantillon placé à l'intérieur d'une chambre d'analyse d'un analyseur physico-chimique, par interférométrie optique caractérisé en ce qu'il consiste :

- à partager un faisceau laser incident suivant deux bras parallèles, un bras de mesure et un bras de référence,
- à focaliser à la surface de l'échantillon chacun des deux bras, respectivement l'un dans le cratère, l'autre à proximité, suivant une direction incidente inclinée relativement à la surface de l'échantillon,
- à recombiner les deux faisceaux réfléchis à la surface de l'échantillon pour ne former qu'un seul faisceau,
- et à appliquer le faisceau recombiné à un détecteur interférométrique pour mesurer la différence de marche entre les deux faisceaux réfléchis.

L'invention a également pour objet un dispositif pour la mise en oeuvre du procédé précité.

Le procédé selon l'invention a principalement pour avantages d'avoir ses deux bras de mesure dans la chambre d'analyse de l'analyseur ionique, ce qui évite une compensation d'indice d'air par exemple. Elle permet d'effectuer des mesures en différentiel de la profondeur du cratère. Enfin en doublant chaque trajet il est possible selon l'invention d'obtenir une résolution fondamentale de $\frac{\lambda}{4}$ ce qui donne une résolution de 0,6 nm après traitement en utilisant un laser à l'Hélium-Néon. Il a également pour avantage d'être très peu encombrant et d'être insensible au « tilt »de l'échantillon notamment lorsqu'il y a un changement d'échantillon.

D'autres caractéristiques et avantages de l'invention apparaîtront à l'aide de la description qui suit, faite au regard des dessins annexés qui représentent :

- la figure 1, un schéma de principe de mise en oeuvre d'un interféromètre différentiel pour la mesure de cratères de petites dimensions suivant l'invention,
- la figure 2, un deuxième exemple de mise en oeuvre d'un interféromètre différentiel selon l'invention,
- les figures 3 et 4, deux modes de réalisation du système de renvoi de faisceau utilisé pour la réalisation de l'interféromètre de la figure 2,
- la figure 5, un mode de réalisation détaillé de l'interféromètre de la figure 2.

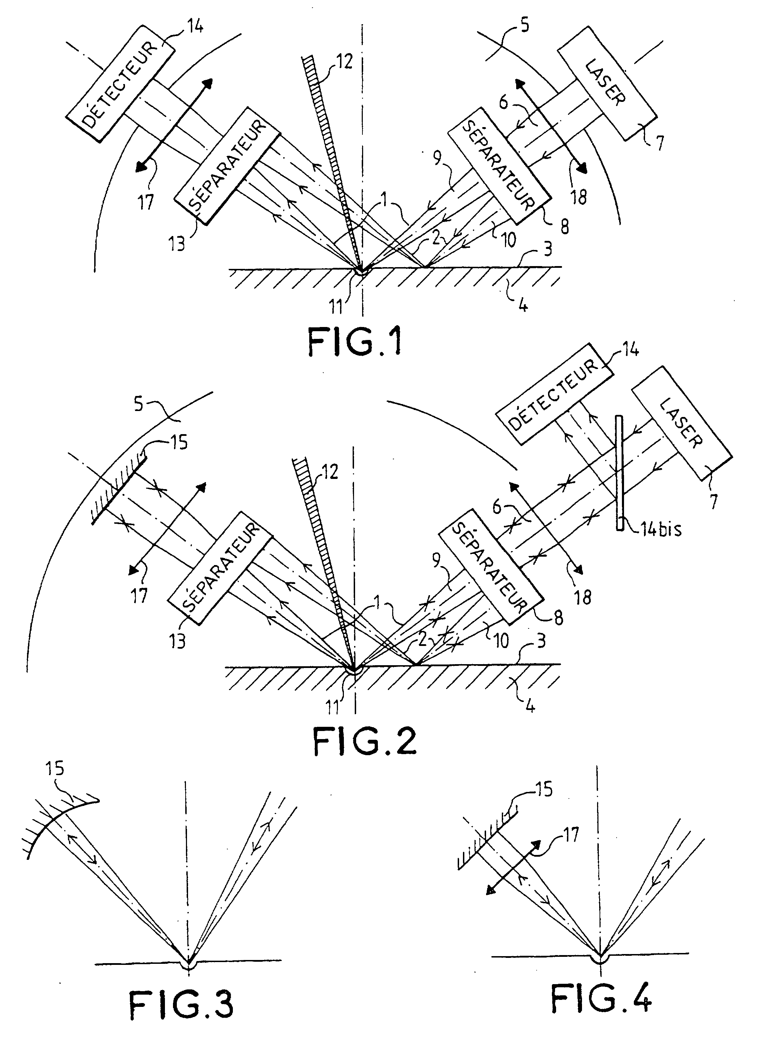

Comme représenté à la figure 1, le procédé selon l'invention met en oeuvre un interféromètre différentiel à séparation de faisceau comportant un bras de mesure 1, un bras de référence 2 inclinés relativement à la surface 3 d'un échantillon 4 sous test à l'intérieur d'une chambre 5 d'un analyseur ionique. Les faisceaux composant les bras de mesure sont obtenus à partir d'un faisceau laser 6 produit par une source laser 7 bifréquence. Un système optique de séparation 8 sépare le faisceau laser 6 en deux faisceaux parallèles 9, 10 formant respectivement le bras de mesure 1 et le bras de référence 2, qui est focalisé par la lentille 18 à la surface 3 de l'échantillon 4 respectivement l'un dans le creux d'un cratère 11 en cours d'érosion par un faisceau de particules 12 émis par l'analyseur ionique et l'autre à côté du cratère 11. Les faisceaux 9 et 10 après réflexion sur la surface 3 de l'échantillon 4 sont ensuite recombinés par un deuxième système optique de séparation 13 identique au premier 8 et collimatés par une lentille 17. Un détecteur interférométrique 14 reçoit le faisceau recombiné et collimaté provenant du deuxième système optique de séparation 13. Les systèmes optiques de séparation du faisceau 8 et 13 peuvent être formés par tout type de dispositif séparateur de polarisation ou encore par des cristaux biréfringents. Suivant le mode de réalisation de la figure 1, la résolution qui peut être obtenue est de $\frac{\lambda}{2}$.

Une résolution de $\frac{\lambda}{4}$ peut être obtenue suivant le mode de réalisation de la figure 2 où les éléments homologues à ceux de la figure 1 sont représentés avec les mêmes références. Dans ce mode de réalisation les faisceaux réfléchis sur l'échantillon 4 sont renvoyés sur eux-mêmes par un système de renvoi 15 placé en sortie du deuxième dispositif optique séparateur de faisceau 13. Ils sont ensuite recombinés par le dispositif optique de séparation et de focalisation d'entrée 8 qui est traversé dans l'autre sens. A la différence de l'interféromètre différentiel de la figure 1, celui représenté à la figure 2 comporte un dispositif optique 14 bis, sous la forme par exemple d'un miroir semi-transparent, séparateur du faisceau de retour recombiné par le dispositif optique de séparation 8 pour renvoyer le faisceau de retour recombiné vers le détecteur 14. Le système représenté à la figure 2 présente l'avantage d'une résolution de $\frac{\lambda}{4}$ relativement à celui de la figure 1 et d'être insensible au défaut d'alignement de l'échantillon 4 dans la chambre d'analyse. Comme pour le système de la figure 1, les séparateurs de faisceaux 8 et 13 sont identiques, et peuvent être formés par tout type de séparateurs de polarisation connu, ou par un cristal biréfringent. Comme montré sur les figures 3 et 4, le système de renvoi 15 peut être formé par un miroir sphérique ou par un miroir plan associé à une lentille convergente 17.

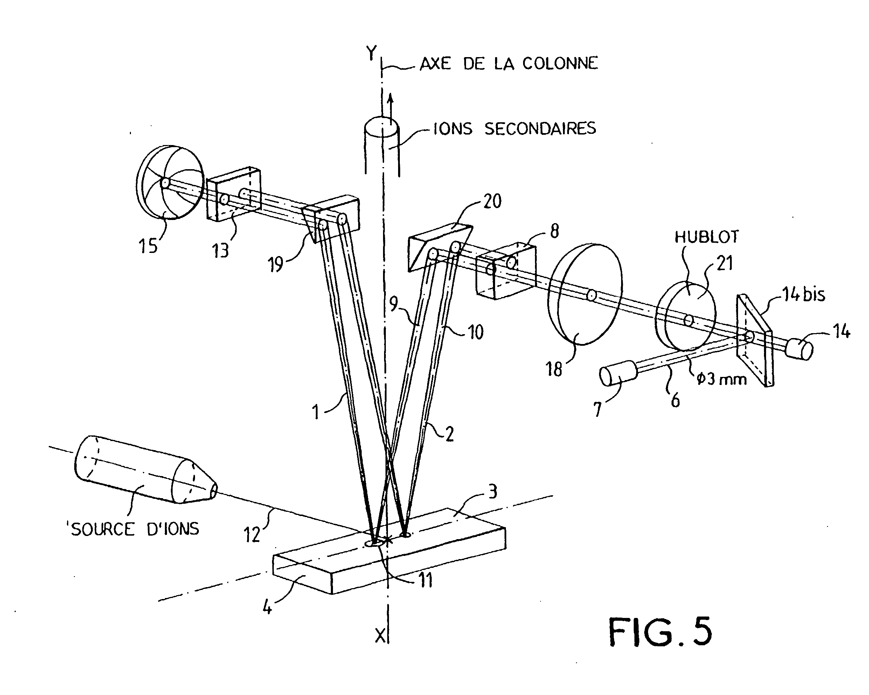

Un exemple de réalisation plus détaillé du dispositif de la figure 2 est montré suivant une vue en perspective à la figure 5 où les éléments homologues sont représentés avec les mêmes références. Dans cet exemple, les séparateurs de faisceaux 8 et 13 sont formés par des cristaux de calcite ou Spath d'Islande $CaCO_3$. Le cristal 13 est placé entre le miroir sphérique de renvoi 15 et l'échantillon 4. Les faisceaux incident et réfléchi sur le miroir 15 sont confondus et passent par le centre de courbure du miroir. Ils se transforment en deux faisceaux parallèles espacés d'environ 0,2 mm entre le cristal 13 et l'échantillon 4. Ces faisceaux convergent sur l'échantillon 4 en deux spots de 60 µm, l'un des deux étant quasiment confondu avec le centre de courbure du miroir 15. A ces deux faisceaux sont associés deux faisceaux divergents parallèles symétriques des deux premiers par rapport à la direction normale à la surface 3 de l'échantillon. Ces deux faisceaux divergents sont appliqués sur le deuxième cristal de calcite 8 pour être recombinés en un seul faisceau de rayons parallèles par une lentille de focalisation 18. Ce faisceau véhicule dans un sens le rayon laser 6 émis par la tête laser 7 et le rayon résultant de la somme des deux faisceaux réfléchis sur l'échantillon 4 à destination du détecteur 14. Comme sur la figure 2, le miroir semi-transparent 14 bis assure la séparation du faisceau laser du rayon résultant appliqué sur le détecteur 14. Des miroirs de renvoi 19 et 20 sont disposés sur les trajets optiques des deux bras de mesure 1 et 2 de façon à aligner les axes optiques du miroir sphérique 15 et de la lentille de focalisation 18 dans une direction normale à l'axe de la colonne X, Y de l'analyseur ionique tout en gardant aux faisceaux convergent et divergent sur l'échantillon 4 des directions inclinées. Cette disposition facilite la construction de l'interféromètre à l'intérieur du corps central en libérant notamment l'espace nécessaire à la circulation des ions secondaires arrachés de l'échantillon dans la direction de l'axe de la colonne. Un hublot 21 fixé sur la paroi de la chambre d'analyse permet d'isoler la tête laser 7 et le détecteur 14 du restant des composants formant l'interféromètre, par ce hublot passe le faisceau commun appliqué sur le miroir semi-transparent 14 bis.

## Revendications

1. Procédé de mesure de fond de cratères en cours de formation sur un échantillon (4) placé à l'intérieur d'une chambre d'analyse d'un analyseur physico-chimique, par interférométrie optique **caractérisé en ce qu'**il consiste :

   - à partager un faisceau laser (6) incident bi-fréquences suivant deux bras parallèles, un bras de mesure (1) et un bras de référence (2),
   - à focaliser à la surface (3) de l'échantillon chacun des deux bras (1, 2), respectivement l'un dans le cratère, l'autre à proximité, suivant une direction incidente inclinée relativement à la surface (3) de l'échantillon (4),
   - à recombiner les deux faisceaux réfléchis par la surface de l'échantillon pour ne former qu'un seul faisceau,
   - et à appliquer le faisceau recombiné à un détecteur interférométrique (14) pour mesurer la différence de marche entre les deux faisceaux réfléchis.

2. Procédé selon la revendication 1, **caractérisé en ce que** le faisceau laser (6) est partagé puis recombiné par des séparateurs (8, 13) de faisceaux identiques.

3. Procédé selon l'une quelconque des revendications 1 et 2 **caractérisé en ce que** le faisceau laser est partagé puis recombiné par des séparateurs de polarisation (8, 13) identiques.

4. Procédé selon la revendication 3, **caractérisé en ce que** les séparateurs de polarisation (8, 13) sont des cristaux biréfringents.

5. Procédé selon l'une quelconque des revendications 1 à 4, **caractérisé en ce qu'**il consiste à renvoyer vers le détecteur interférométrique (14) par autocollimation les deux faisceaux focalisés à la surface (3) de l'échantillon (4) par un miroir sphérique (15) centré sur le point d'impact en faisant parcourir aux faisceaux un chemin optique inverse du chemin de focalisation des deux bras sur l'échantillon (4),rendant le système insensible aux défauts d'alignement de l'échantillon.

6. Procédé selon la revendication 5, **caractérisé en ce qu'**il consiste à recombiner les deux faisceaux renvoyés en un faisceau de rayons parallèles confondu avec le faisceau laser (6) du faisceau incident avant de l'appliquer au détecteur interférométrique (14).

7. Dispositif pour la mesure de fond de cratères en cours de formation sur un échantillon (4) placé à la l'intérieur d'une chambre d'analyse d'un analyseur ionique **caractérisé en ce qu'**il comprend :

   - un laser (7) pour l'émission d'un faisceau laser incident bi-fréquences,
   - un premier moyen séparateur de faisceau (8) pour séparer le faisceau laser incident suivant deux bras parallèles, un bras de mesure (1) et un bras de référence (2),
   - un moyen de focalisation (18) pour focaliser à la surface (3) de l'échantillon chacun des deux bras (1, 2) respectivement l'un dans le cratère l'autre à proximité , suivant une direction incidente inclinée relativement à la surface (3) de l'échantillon (4),
   - un moyen pour recombiner (13) les deux faisceaux réfléchis à la surface de l'échantillon pour ne former qu'un seul faisceau,
   - et un moyen de détection interférométrique (14) pour mesurer la différence de marche entre les deux faisceaux réfléchis, le laser et le moyen de détection étant placés à l'extérieur de la chambre d'analyse.

8. Dispositif selon la revendication 7 **caractérisé en ce que** le moyen pour recombiner (13) les deux faisceaux réfléchis est formé par un moyen séparateur de faisceaux identique au premier moyen séparateur de faisceaux.

9. Dispositif selon l'une quelconque des revendications 7 à 8 **caractérisé en ce qu'**il comprend des moyens de réflexion (15) pour renvoyer vers le détecteur interférométrique (14) les deux faisceaux réfléchis suivant un chemin optique inverse du chemin de focalisation des deux bras sur l'échantillon (4),doublant ainsi la résolution fondamentale du dispositif.

10. Dispositif selon la revendication 9 **caractérisé en ce que** les moyens de réflexion sont formés par un miroir sphérique (15).

11. Dispositif selon la revendication 9 **caractérisé en ce que** les moyens de réflexion sont formés par un miroir plan (15) couplé à une lentille convergente (17).

**12.** Dispositif selon l'une quelconque des revendications 7 à 11 **caractérisé en ce que** les moyens séparateurs de faisceaux (8, 13) sont des moyens à séparation de polarisation, ceux-ci étant formés par des cristaux de calcite biréfringents.

## Patentansprüche

**1.** Verfahren zur Messung von Strukturtiefen während ihrer Bildung auf einer Probe (4), die im Inneren einer Analysekammer eines physikalisch-chemischen Analysators plaziert ist, durch optische Interferometrie, **dadurch gekennzeichnet, dass** es darin besteht:

- ein einfallendes Laserbündel (6) mit zwei Frequenzen in zwei parallele Arme zu teilen, einen Messarm (1) und einen Referenzarm (2),
- jeden der zwei Arme (1,2) in einer relativ zur Oberfläche (3) der Probe (4) geneigten Richtung auf die Oberfläche (3) der Probe zu fokussieren, den einen jeweils in die Strukturtiefe und den anderen in die Nähe davon,
- die zwei von der Oberfläche der Probe reflektierten Bündel zu rekombinieren, um ein einzelnes Bündel zu bilden,
- und mit dem rekombinierten Bündel einen interferometrischen Detektor (14) zu beaufschlagen, um den Gangunterschied zwischen den zwei reflektierten Bündeln zu messen.

**2.** Verfahren nach Anspruch 1, **dadurch gekennzeichnet, dass** das Laserbündel (6) durch identische Strahlteiler (8, 13) geteilt und dann rekombiniert wird.

**3.** Verfahren nach einem der Ansprüche 1 und 2, **dadurch gekennzeichnet, dass** das Laserbündel durch identische Polarisationsteiler (8, 13) geteilt und dann rekombiniert wird.

**4.** Verfahren nach Anspruch 3, **dadurch gekennzeichnet, dass** die Polarisationsteiler (8, 13) doppelbrechende Kristalle sind.

**5.** Verfahren nach einem der Ansprüche 1 bis 4 **dadurch gekennzeichnet, dass** es darin besteht, die zwei auf die Oberfläche (3) der Probe (4) fokussierten Bündel durch einen auf den Auftreffpunkt zentrierten sphärischen Spiegel (15) durch Autokollimation zu dem interferometrischen Detektor (14) zurückzulenken, indem man die Bündel einen optischen Weg durchlaufen lässt, der invers zu dem Weg der Fokussierung der zwei Arme auf die Probe (4) ist, wodurch das System unempfindlich auf Ausrichtfehler der Probe wird.

**6.** Verfahren nach Anspruch 5, **dadurch gekennzeichnet, dass** es darin besteht, die zwei zurückgelenkten Bündel zu einem Bündel paralleler Strahlen zu rekombinieren, das mit dem Laserbündel (6) des einfallenden Bündels verschmilzt, bevor der interferometrische Detektor (14) damit beaufschlagt wird.

**7.** Vorrichtung zur Messung von Strukturtiefen während ihrer Bildung auf einer Probe (4), die im Inneren einer Analysekammer eines Ionen-Analysators plaziert ist, durch, **dadurch gekennzeichnet, dass** sie folgendes umfasst:

- einen Laser (7) zur Emission eines einfallenden Laserbündels mit zwei Frequenzen,
- ein erstes Strahlteilermittel (8) zum Trennen des einfallenden Laserbündels in zwei parallele Arme, einen Messarm (1) und einen Referenzarm (2),
- ein Fokssiermittel (18), um jeden der zwei Arme (1, 2) entlang einer relativ zu der Oberfläche (3) der Probe (4) geneigten Einfallsrichtung auf die Oberfläche (3) der Probe zu fokussieren, den einen jeweils in die Vertiefung und den anderen in die Nähe davon,
- ein Mittel zum Rekombinieren (13) der zwei an der Oberfläche der Probe reflektierten Bündel, um ein einzelnes Bündel zu bilden,
- ein interfereometrisches Detektionsmittel (14), um den Gangunterschied zwischen den zwei reflektierten Bündeln zu messen, wobei der Laser und das Detektionsmittel außerhalb der Analysekammer platziert sind.

**8.** Vorrichtung nach Anspruch 7, **dadurch gekennzeichnet, dass** das Mittel zum Rekombinieren (13) der zwei reflektierten Bündel durch ein Strahlteilermittel gebildet wird, das identisch zu dem ersten Strahlteilermittel ist.

**9.** Vorrichtung nach einem der Ansprüche 7 bis 8, **dadurch gekennzeichnet, dass** es Reflexionsmittel (15) umfasst, um die zwei reflektierten Bündel zu dem interferometrischen Detektor (14) entlang eines optichen Weges zu lenken, der invers zum Fokussierweg der zwei Arme auf die Probe (4) ist, wodurch die Fundamentalauflösung der Vorrichtung verdoppelt wird.

**10.** Vorrichtung nach Anspruch 9, **dadurch gekennzeichnet, dass** die Reflexionsmittel von einem sphärischen Spiegel (15) gebildet werden.

**11.** Vorrichtung nach Anspruch 9, **dadurch gekennzeichnet, dass** die Reflexionsmittel von einem Planspiegel (15) gebildet werden, der mit einer Sammellinse (17) gekoppelt ist.

**12.** Vorrichtung nach eine der Ansprüche 7 bis 11, **dadurch gekennzeichnet, dass** die die Strahlteilermittel (8, 13) Polarisationsteilermittel sind, die von doppelbrechenden Calcitkristallen gebildet werden.

## Claims

**1.** Method for depth measurement of craters being formed on a sample (4) placed inside an analysis chamber of a physico-chemical analyzer, by optical interferometry, **characterized in that** it consists:

- in splitting a bifrequency incident laser beam (6) into two parallel branches: a measurement branch (1) and a reference branch (2),
- in focusing each of the two branches (1, 2) onto the surface (3) of the sample, respectively one in the crater and the other close to it, in an incident direction which is inclined relative to the surface (3) of the sample (4),
- in recombining the two beams reflected by the surface of the sample in order to form only a single beam,
- and in applying the recombined beam to an interferometric detector (14) in order to measure the path difference between the two reflected beams.

**2.** Method according to Claim 1, **characterized in that** the laser beam (6) is split then recombined by identical beam splitters (8, 13).

**3.** Method according to either one of Claims 1 and 2, **characterized in that** the laser beam is split then recombined by identical polarization splitters (8, 13).

**4.** Method according to Claim 3, **characterized in that** the polarization splitters (8, 13) are birefringent crystals.

**5.** Method according to any one of Claims 1 to 4, **characterized in that** it consists in returning the two beams that were focused onto the surface (3) of the sample (4) to the interferometric detector (14) by autocollimation using a spherical mirror (15) centred on the point of impact, so as to make the beams travel along an optical path which is the reverse of the path along which the two branches were focused onto the sample (4), thus rendering the system insensitive to the alignment defects of the sample.

**6.** Method according to Claim 5, **characterized in that** it consists in recombining the two returned beams into a parallel-ray beam, which coincides with the laser beam (6) of the incident beam, before applying it to the interferometric detector (14).

**7.** Device for the depth measurement of craters being formed on a sample (4) placed inside an analysis chamber of an ion analyzer, **characterized in that** it comprises:

- a laser (7) for emitting a bifrequency incident laser beam,
- a first beam-splitter means (8) for splitting the incident laser beam into two parallel branches: a measurement branch (1) and a reference branch (2),
- a focusing means (18) for focusing each of the two branches (1, 2) onto the surface (3) of the sample, respectively one in the crater and the other close to it, in an incident direction which is inclined relative to the surface (3) of the sample (4),
- a means (13) for recombining the two beams reflected from the surface of the sample in order to form only a single beam,
- and an interferometric detection means (14) for measuring the path difference between the two reflected beams, the laser and the detection means being placed outside the analysis chamber.

**8.** Device according to Claim 7, **characterized in that** the means (13) for recombining the two reflected beams is formed by a beam-splitter means identical to the first beam-splitter means.

**9.** Device according to either one of Claims 7 and 8, **characterized in that** it comprises reflection means (15) for sending the two reflected beams towards the interferometric detector (14) along an optical path which is the reverse of the path along which the two branches were focused onto the sample (4), thus doubling the fundamental resolution of the device.

**10.** Device according to Claim 9, **characterized in that** the reflection means are formed by a spherical mirror (15).

**11.** Device according to Claim 9, **characterized in that** the reflection means are formed by a plane mirror (15) coupled with a converging lens (17).

**12.** Device according to any one of Claims 7 to 11, **characterized in that** the beam-splitter means (8, 13) are polarization-splitting means, the latter being formed by birefringent calcite crystals.

FIG.1

FIG.2

FIG.3

FIG.4

Y — AXE DE LA COLONNE

IONS SECONDAIRES

20

8

HUBLOT

21

14 bis

14

18

ø3 mm

7

6

15

13

19

9

10

1

2

3

SOURCE D'IONS

12

11

4

X

FIG.5

EP 0 942 261 B1